# EUROPÄISCHE PATENTANMELDUNG

(11) **EP 1 182 722 A2**
(43) Veröffentlichungstag der Anmeldung: **27.02.2002**
(21) Anmeldenummer: 01119830.6
(22) Anmeldetag: 16.08.2001
(51) Int. Cl.: H01M 8/04, H01M 8/10

(54) **Druckausgleich bzw. Druckregelung in einem Brennstoffenzellengesamtsystem (DMFC)**

(30) Priorität: 22.08.2000 DE 10041125
(71) Anmelder: DaimlerChrysler AG, 70567 Stuttgart (DE)
(72) Erfinder: Gerberich, Robert, 87439 Kempten (DE); Waitkat, Peter, 89075 Ulm (DE)

(57) **Zusammenfassung**

Ein Brennstoffzellen-System (1) mit wenigstens einer Brennstoffzelle weist einen Anodenkreislauf (6), in welchem ein unter Druck stehendes flüssiges Kühlmittel/Brennstoff-Gemisch zirkuliert und einen Anodenraum (4) der Brennstoffzelle durchströmt sowie einen Kathodenraum (5) als Teil eines Kathodenkreislaufs auf. Der Kathodenraum ist durch eine protonenleitende Membran (3) von dem Anodenraum getrennt. In dem Kathodenkreislauf (8) strömt ein unter Druck stehendes sauerstoffhaltiges Gas zu dem Kathodenraum. Der Anodenkreislauf und der Kathodenkreislauf sind zum Druckausgleich in der Brennstoffzelle durch wenigstens eine Verbindungsleitung verbunden.

## Beschreibung

Die Erfindung betrifft ein Brennstoffzellen-System mit wenigstens einer Brennstoffzelle, mit einem Anodenkreislauf und einem Kathodenkreislauf nach der im Oberbegriff von Anspruch 1 näher definierten Art.

Grundsätzlich ist bei Brennstoffzellen-Systemen, insbesondere bei solchen, welche den Kathodenraum von dem Anodenraum der Brennstoffzelle über eine Membran trennen, die Problematik einer Druckregelung in dem Anodenraum und dem Kathodenraum bekannt. Stellt sich hier ein Differenzdruck zwischen den beiden Räumen ein, der ein entsprechendes Niveau überschreitet, so kommt es zu einer Beschädigung der im allgemeinen sehr dünn ausgebildeten Membranen, welche üblicherweise auf Basis von Polymeren oder dergleichen aufgebaut sind. Im schlimmsten Fall, nämlich einem Druckanstieg in einem der Räume aufgrund einer fehlerhaften Funktion von Peripheriegeräten, eines Leitungsbruchs oder dergleichen, kann die Membran durch den dann sehr schnell sehr groß werdenden Druckunterschied zerstört werden, so dass ein vergleichsweise kleiner und einfach zu behebender Schaden im Bereich der Peripherie einen sehr großen Schaden, nämlich eine Zerstörung der Membranen, im Bereich der Brennstoffzelle verursacht.

Die Problematik der Druckregelung ist somit allgemein bekannt, so dass in der US 4,904,547, in der JP 61 203 577, der JP 04 006 755 A und der JP 59 075 572 A entsprechende Anordnung zur Druckregelung beschrieben sind. Dabei wird jeweils die Kathodenseite und die Anodenseite unabhängig voneinander auf ein festgelegtes, im allgemeinen gleiches Druckniveau eingeregelt.

Dies erfordert selbstverständlich eine doppelt vorhandene Anordnung an Sensoren, Reglern und Aktuatoren, die über die entsprechende Möglichkeit verfügen, den Druck in der jeweiligen Seite zu beeinflussen.

Eine weitere Strategie zum Beeinflussen der Druckdifferenz zwischen Anodenseite und Kathodenseite einer Brennstoffzelle zeigen beispielsweise die US 4,528,251 und die JP 01 076 677 A, welche entsprechende Druckausgleichsanordnungen aufweisen, die den Druckausgleich zwischen der Anodenseite und der Kathodenseite über ein System von kommunizierenden Röhren realisieren. Diese kommunizierenden Röhren sind dabei mit einer Sperrflüssigkeit gefüllt, so dass es zu keinem Gasausgleich zwischen der Anodenseite und der Kathodenseite der Brennstoffzelle kommen kann.

Dieses strikte Trennen der Anodenseite und der Kathodenseite ist von besonderer Bedeutung, da bei den entsprechenden Brennstoffzellenanlagen unbedingt vermieden werden muß, dass das wasserstoffhaltige Gas der Anodenseite mit dem sauerstoffhaltigen Gas der Kathodenseite zusammenkommt, da hier ansonsten ein sehr explosives Gemisch, das sogenannte Knallgas, entsteht.

Diese Trennung läßt sich zwar durch die Flüssigkeitssäule mit der Sperrflüssigkeit erreichen, jedoch weist dieses System einen vergleichsweisen hohen konstruktiven und apparativen Aufwand auf und ist aufgrund der Flüssigkeitssäulen an eine bestimmte Ausrichtung im Verhältnis zur Richtung der Gravitation gebunden.

Eine derartige Druckregelung für ein Brennstoffzellen-System, welche also lageabhängig ist, kann überwiegend für stationäre Anwendungen vorgesehen werden, im Bereich von mobilen Anwendungen, beispielsweise in einem Kraftfahrzeug, entstehen durch die fehlende Lageunabhängigkeit massive Nachteile, welche gegebenenfalls durch sehr aufwendige Konstruktionen, beispielsweise kardanische Aufhängungen oder dergleichen, prinzipiell ausgeglichen werden könnten, den konstruktiven Aufwand und die Kosten einer derartigen Anlage aber sehr nachteilig beeinflussen würden.

Es ist daher die Aufgabe der Erfindung, ein Brennstoffzellen-System, zur Verwendung mit einem flüssigen Kühlmittel/Brennstoff-Gemisch, beispielsweise mit einer Direkt-Methanol-Brennstoffzelle, zu schaffen, welches auf sehr einfache Weise einen Druckausgleich zwischen dem Anodenkreislauf und dem Kathodenkreislauf der Brennstoffzelle ermöglicht.

Erfindungsgemäß wird diese Aufgabe durch die im kennzeichnenden Teil von Anspruch 1 genannten Merkmale gelöst.

Dabei wird der Druckausgleich zwischen dem Anodenraum und dem Kathodenraum der Brennstoffzelle bzw. den beiden die jeweiligen Räume beinhaltenden Kreisläufen erfindungsgemäß durch die Verbindungsleitung realisiert. Dabei ist der Aufbau vergleichsweise einfach, robust und prinzipiell sowohl von seiner Einbaulage als auch von der Temperatur der durch ihn verbundenen Volumenströme unabhängig.

Durch die Verbindung der beiden Kreisläufe über die Verbindungsleitung, welche in einer besonders günstigen Ausführungsform der Erfindung eine Ventileinrichtung aufweist, über welche die Verbindungsleitung sofern erforderlich zu öffnen ist, kann es zu einem sofortigen und unbedingten Druckausgleich zwischen den beiden Kreisläufen kommen.

Da das Brennstoffzellen-System mit der wenigstens einen Brennstoffzelle bzw. dem Brennstoffzellenstack dabei mit einem Kühlmittel/Brennstoffgemisch auf der Anodenseite und einem sauerstoffhaltigen Gas, beispielsweise Luft, auf der Kathodenseite betrieben wird, kann eine Verbindung zwischen der Anodenseite und der Kathodenseite hergestellt werden, ohne ein sicherheitstechnisches Risiko aufgrund einer zu erwartenden Reaktion zwischen dem Brennstoff und dem Sauerstoff des sauerstoffhaltigen Gases einzugehen. Üblicherweise handelt es sich bei dem Brennstoff um einen flüssigen Kohlenwasserstoff, beispielsweise Methanol, welcher in einer ca. drei bis fünf prozentigen Lösung in dem Kühlmittel, beispielsweise Wasser, vorliegt.

Ein derartiges Wasser/Methanol-Gemisch mit geringen Methanol-Konzentration ist dabei nicht in der Lage, mit dem sauerstoffhaltigen Gas, insbesondere der Luft der Kathodenseite, eine Reaktion einzugehen, welche aus sicherheitstechnischen Gründen bedenklich wäre.

Daher ist man für den Einsatzzweck bei einer derartigen, mit einem flüssigen Brennstoff direkt betriebenen Brennstoffzelle in der Lage, auf eine sehr einfache und effektive Weise einen Druckausgleich zwischen der Anodenseite und der Kathodenseite, und damit ein Zerstören der Membran durch einen zu hohen Differenzdruck zu realisieren.

Prinzipiell ist das System bei der Ausgestaltung der Erfindung mit einer Ventileinrichtung als reines Notfallssystem anzusehen, so dass hier im Falle einer Fehlfunktion eines Peripheriegeräts, eines Leitungsbruchs oder dergleichen im Entstehen eines Differenzdrucks ein sofortiger "Not"-Druckausgleich durchgeführt werden kann.

In einer besonders günstigen Ausführungsform der Erfindung ist die Ventileinrichtung in der Verbindungsleitung dazu mittels eines Aktuators und einer Hilfsenergie verschließbar.

Dies bedeutet, dass bei einem Ausfall der Hilfsenergie die Ventileinrichtung öffnet, so dass in einer derartigen Notfallsituation ein Druckausgleich zwischen der Anodenseite und der Kathodenseite der Brennstoffzelle bzw. Brennstoffzellenstacks umgehend erzwungen wird.

In einer weiteren sehr günstigen Ausführungsform der Erfindung kann die entsprechende Ventileinrichtung auch als Regelventil ausgebildet sein, so dass sich ein exakter vorgegebener Differenzdruck einstellen läßt.

Mit dieser weiteren Art der Anwendung kann dann ein gezieltes Regeln des Differenzdrucks während des Betriebs der Anlage erfolgen, wobei hier allerdings geringfügige Verluste an Methanol aus dem Anodenkreislauf in den Kathodenkreislauf in Kauf genommen werden müssen.

Da aber üblicherweise in dem Kathodenkreislauf, insbesondere in dem Bereich nach dem Kathodenraum des Brennstoffzellenstack ohnehin solche Bestandteile wie Wasser und dergleichen vorliegen, welche aus der Luft des Kathodenkreislaufs auskondensiert und in den Anodenkreislauf zurückgeführt werden, kann auch hier eine Anwendung durchaus Vorteile bezüglich der Vereinfachung der eingesetzten Komponenten bringen, ohne dass es eines zusätzlichen Aufwands bedarf, das Austreten vom Methanol in die Umwelt zu verhindern. Selbstverständlich kann auch das Regelventil ohne eine Hilfsenergie betrieben werden, beispielsweise in der aus der Hydraulik bekannten und üblichen Art von Differenzdruckregelventilen. Damit wird dann zusätzlich zu der Regelfunktion die als erste Anwendung eingangs bereits beschriebene -hilfsenergieunabhängige- sicherheitstechnische Funktion der Verbindungsleitung möglich.

In einer weiteren sehr günstigen Ausgestaltung der Erfindung enthält der Anodenkreislauf einen Gasabscheider zum Abscheiden des in dem Anodenraum stehenden Kohlendioxids. Bei bestimmungsgemäßen Betrieb des Gasabscheiders weist dieser einen mit Gas gefüllten Bereich auf, in welchen die Verbindungsleitung zwischen dem Anodenkreislauf und dem Kathodenkreislauf mündet. Wird nun in dem Kathodenkreislauf in Strömungsrichtung sauerstoffhaltigen Gases vor dem Kathodenraum ein Kompressor und in Strömungsrichtung des sauerstoffhaltigen Gases nach dem Kathodenraum ein Expander, welche insbesondere als Kompressor-Expander-Einheit ausgebildet ist, installiert, so kann die Verbindungsleitung im Bereich zwischen dem Kathodenraum und dem Expander in den Kathodenkreislauf münden.

Mit dieser Anordnung läßt sich dann der Druck in dem Anodenkreislauf über den Druck in dem Kathodenkreislauf regeln. Dadurch, dass die Kompressoreinheit einen bestimmten Druck in dem Kathodenkreislauf einstellt und diesen über die Verbindungsleitung in den Bereich des Gasabscheiders weiterleitet, stellt sich in beiden Kreisläufen der gleiche Druck ein, es kommt also zu keiner Druckdifferenz.

Einen weiteren sehr vorteilhaften Anwendungszweck kann der eben beschriebene Aufbau der Anlage zusätzlich aufweisen. So entsteht hier nämlich der Vorteil, dass im Warmlaufbetrieb über die Verbindungsleitung sauerstoffhaltiges Gas aus dem Kathodenkreislauf im Bereich des Gasabscheiders strömt und damit den Druck in dem Anodenkreislauf aufrecht erhält. Wenn nach einer entsprechenden Warmlaufzeit in dem Anodenkreislauf bzw. in dem Anodenraum der Brennstoffzelle dann in entsprechender Menge Kohlendioxid-Gas produziert wird, wird sich dieses Kohlendioxid-Gas in dem gasgefüllten Bereich des Gasabscheider sammeln und wird über die Verbindungsleitung auf die dann bei geringerem Druck liegende Kathodenseite der Verbindungsleitung abströmen. Durch eine einzige Kompressor-Expander-Einheit läßt sich so während der Warmlaufphase der Druck in dem Anodenkreislauf aufrecht erhalten und während des Standardbetriebs der Brennstoffzelle der Abtransport des in der Brennstoffzelle entstehenden Kohlendioxids sicherstellen.

Weitere vorteilhafte Ausgestaltungen der Erfindung ergeben sich aus den restlichen Unteransprüchen und aus den anhand der Zeichnung nachfolgend beschriebenen Ausführungsbeispielen.

Es zeigt:
- Fig. 1: einen grundlegenden Aufbau eines Brennstoffzellen-Systems mit einem Anodenkreislauf, einem Kathodenkreislauf und einer Verbindungsleitung;
- Fig. 2: einen vergleichbaren Aufbau zu Fig. 1 mit einem Gasabscheider in dem Anodenkreislauf in einer Warmlaufphase des Brennstoffzellen-Systems; und

- Fig. 3: einen Aufbau gemäß Fig. 2 in einem normalen Betriebszustand des Brennstoffzellen-Systems.

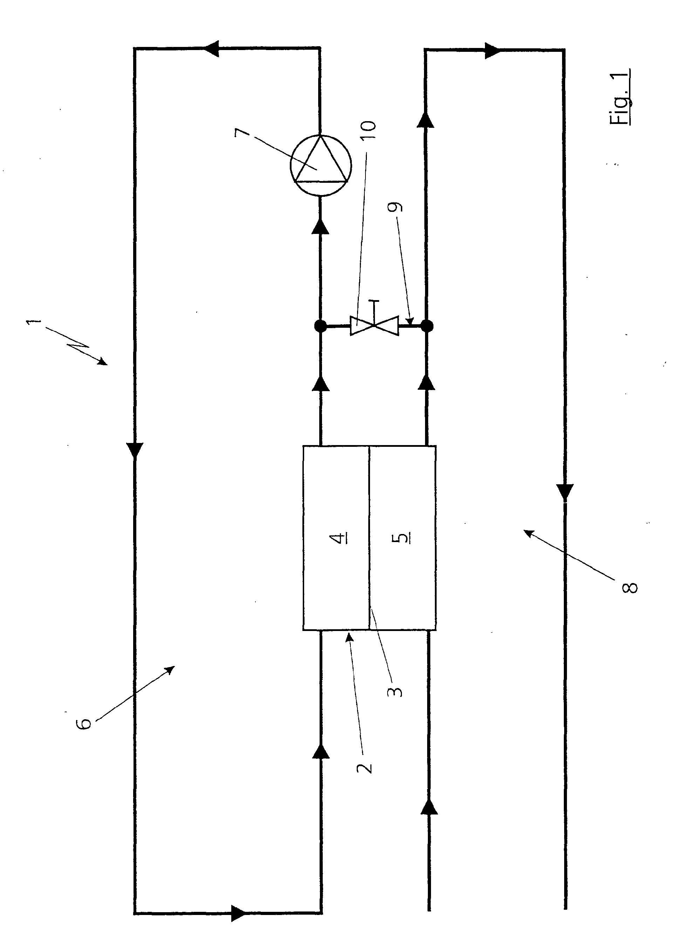

Fig. 1 zeigt den grundlegenden Aufbau eines Brennstoffzellen-Systems 1 in einer prinzipmäßigen Darstellung. Das Brennstoffzellen-System 1 weist wenigstens eine Brennstoffzelle 2 auf, in der eine protonenleitende Membran 3 einen Anodenraum 4 von einem Kathodenraum 5 trennt. In dem Anodenraum 4 befindet sich ein flüssiges Kühlmittel/Brennstoff-Gemisch, insbesondere ein Wasser/Methanol-Gemisch, welches in einem Anodenkreislauf 6 von einer Fördereinrichtung 7 umgewälzt wird. Bei der Brennstoffzelle 2 handelt es sich also um eine Direkt-Methanol-Brennstoffzelle, welche mit dem flüssigen Methanol aus dem Anodenkreislauf 6 betrieben wird.

Zusätzlich kann der Anodenkreislauf 6 entsprechende Einrichtungen zum Einbringen von in dem Anodenraum 4 der Brennstoffzelle 2 zu elektrischer Energie verstromten Methanol, Abkühleinrichtungen oder dergleichen aufweisen, welche für die Erfindung jedoch nicht von Bedeutung sind und deshalb hier nicht näher dargestellt wurden. In dem durch die protonenleitende Membran 3 von dem Anodenraum 4 getrennten Kathodenraum 5 der Brennstoffzelle 2 befindet sich ein sauerstoffhaltiges Gas, welches über einen Kathodenkreislauf 8 zu dem Kathodenraum 5 der Brennstoffzelle 2 gefördert wird. Die entsprechenden Fördereinrichtungen des Kathodenkreislaufs 8 sind in Fig. 1 nicht dargestellt, da sie für die in Fig. 1 dargestellte Ausführungsform der Erfindung zunächst von untergeordneter Bedeutung sind.

Während des Betriebs des Brennstoffzellen-Systems 1 befinden sich die beiden Kreisläufe 6 und 8 jeweils auf einem vorgegebenen Druckniveau. Um eine Beschädigung der Membran 3 der Brennstoffzelle 2 zu vermeiden, sollten die Druckniveaus in den beiden Kreisläufen 6 und 8 dabei wenigstens annähernd gleich sein. Deshalb erfolgt eine Druckregelung der beiden Kreisläufe 6 und 8 in an sich bekannter und deshalb hier nicht dargestellten Weise jeweils separat für jeden der Kreisläufe 6 und 8. Die Regelungen sind lediglich über eine Steuerung untereinander gekoppelt.

Kommt es nun jedoch zu einem Ausfall der Druckregelung in einem der Kreisläufe 6 oder 8 oder zu einem Ausfall der Fördereinrichtung 7 oder dergleichen in einem der beiden Kreisläufe 6 oder 8, so können sich in den beiden Kreisläufen 6 und 8 unabhängig voneinander sehr unterschiedliche Druckniveaus einstellen. Da diese Druckdifferenzen jeweils an der sehr dünn ausgeführten protonenleitenden Membran 3 der Brennstoffzelle 2 anliegen, kann es hier sehr leicht zu einer Schädigung der Membran 3 kommen.

Insbesondere im Extremfall eines Leitungsbruchs in einem der Kreisläufe 6 oder 8 wird der Druck in diesem Kreislauf 6 oder 8 sofort auf den Atmosphärendruck absinken, so dass die sehr große Druckdifferenz zu dem sich weiterhin bei Betriebsdruck befindlichen anderen Kreislauf 8 oder 6 an der Membran 3 der Brennstoffzelle 2 ansteht.

Nun weist das hier dargestellte Brennstoffzellen-System 1 jedoch eine Verbindungsleitung 9 mit einer Ventileinrichtung 10 zwischen den beiden Kreisläufen 6 und 8 auf. Die beiden Kreisläufe 6 und 8 können über diese Verbindungsleitung 9 direkt miteinander verbunden werden.

Ist die Verbindungsleitung 9 in dem Brennstoffzellen-System 1 lediglich als Notfalllösung vorgesehen, welche eine Zerstörung der Membran 3 beim Auftreten einer Fehlfunktion der Druckregelung eines der Kreisläufe oder im Falle eines Leitungsbruchs, eines Ausfalls der Fördereinrichtung oder dergleichen verhindern soll, so ist die Ventileinrichtung 10 als einfaches Ventil ausgeführt, welches während des normalen Betriebs des Brennstoffzellensystems 1 geschlossen ist.

Dabei ist es dann besonders günstig, wenn dieses einfache Ventil 10 über einen entsprechenden, beispielsweise elektrischen oder hydraulischen Aktuator mittels einer Hilfsenergie in seinem geschlossenen Zustand gehalten wird. Sollte diese Hilfsenergie ausfallen, würde das Ventil 10 dann die Verbindungsleitung 9 öffnen und für einen Druckausgleich zwischen den beiden Kreisläufen 6 und 8 sorgen. So kann sichergestellt werden, dass im Falle einer Fehlfunktion, welche einen Ausfall der Hilfsenergie nach sich zieht, dennoch sofort einen Druckausgleich herbeigeführt wird, was bei einem Einsatz mit entsprechenden Regeleinrichtungen, welche über eine entsprechende Steuerung miteinander gekoppelt wären, so nicht denkbar wäre.

Auch bei andersartigen Problemen in der Anlage, welche ohne einen Ausfall der Hilfsenergie auftreten, und bei welchen ebenfalls ein Differenzdruck, bezogen auf die Membran 3, der beiden Betriebsdrücke der Kreisläufe 6 und 8 einen bestimmten Grenzwert überschreitet, würde das Ventil 10 in der Verbindungsleitung 9 dann sofort die Verbindungsleitung 9 öffnen, um einen Druckausgleich zwischen den beiden Kreisläufen 6 und 8 zu erreichen.

Das Ventil 10 kann beispielsweise als ohne Hilfsenergie geöffnetes 2/2-Wege-Ventil ausgebildet sein.

Da es sich bei der Brennstoffzelle 2 des Brennstoffzellen-Systems 1 um eine mit einem flüssigen Wasser/Methanol-Gemisch betriebene Brennstoffzelle 2 handelt, ist durch die Verbindung der beiden Kreisläufe 6 und 8 über die Verbindungsleitung 9 keine problematische Reaktion der beiden in den Kreisläufen 6 und 8 enthaltenen Stoffe zu befürchten, wie dies beispielsweise bei einer Wasserstoff/Sauerstoff-Brennstoffzelle der Fall wäre. Da das Wasser/Methanol-Gemisch lediglich eine Methanolkonzentration von wenigen Prozentpunkten aufweist, ist die zu erwartende Intensität der Reaktion in der Verbindungsleitung 9 gering und kann problemlos in Kauf genommen werden.

Anstatt eines einfachen 2/2-Wege-Ventils 10 in der Verbindungsleitung 9, welches diese lediglich öffnet bzw. schließt, kann hier auch ein an sich bekanntes Regelventil (nicht dargestellt) als Ventileinrichtung 10 vorgesehen sein. Ein derartiges Regelventil ist aus dem Bereich der Hydraulik an sich bekannt und stellt ein vorgegebenes Druckverhältnis über die Größe von entsprechenden Wirkflächen ein, welche einen Schieber in der Art zueinander bewegen, dass über einen mehr oder weniger langen Drosselspalt die beiden Kreisläufe 6 und 8 miteinander verbunden werden. Die Länge des Drosselspalts wird sich dabei in Abhängigkeit der auf die jeweiligen Wirkflächen anliegenden Drücke der beiden Kreisläufe ändern, so dass sich eine Druckgleichheit in den beiden Kreisläufen 6 und 8 einstellen wird, wenn die entsprechenden Wirkflächen gleich groß sind, die sogenannte Druckübersetzung also eins ist.

Auch ein derartiges Regelventil, welches lediglich über die in den Kreisläufen 6 und 8 herrschenden Drücke über entsprechende Regelflächen wirkt, kann prinzipbedingt ohne Hilfsenergie auskommen und so einen Druckausgleich bei allen denkbaren Betriebssituationen in dem Brennstoffzellen-System 1 ermöglichen.

Anstelle eines derartigen Regelventils sind selbstverständlich auch elektronisch geregelte Drosselventile oder dergleichen als Ventileinrichtung 10 denkbar.

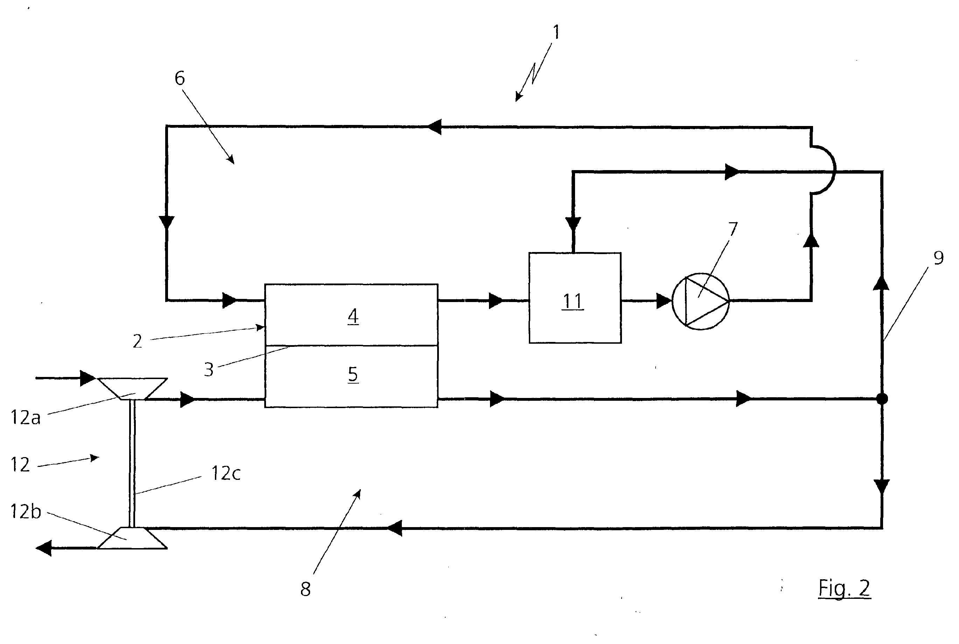

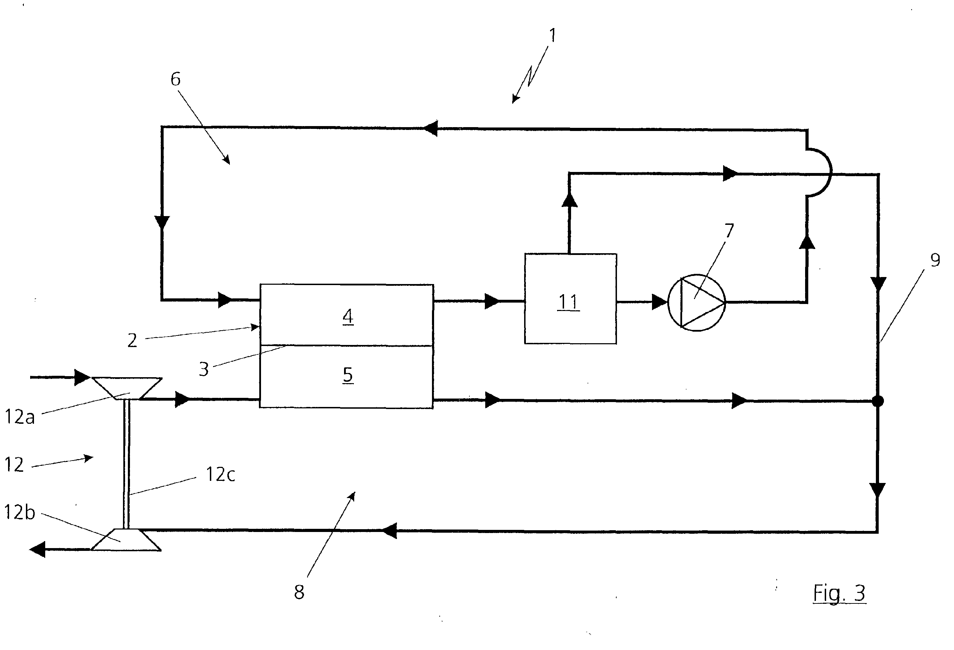

Ein weiterer Anwendungsfall für die Verbindungsleitung 9 ist den beiden nachfolgenden Figuren 2 und 3 nochmals detailliert dargestellt. Auch hier weist das Brennstoffzellen-System 1 die Brennstoffzelle 2 mit ihrem Anodenraum 4, ihrem Kathodenraum 5 und der dazwischen angeordneten protonenleitenden Membran 3 auf. Der Anodenraum 4 ist wieder Teil des Anodenkreislaufs 6, welcher hier außer der Fördereinrichtung 7 noch einen Gasabscheider 11, insbesondere einen CO₂-Abscheider 11, aufweist.

Da beim Betrieb der Brennstoffzelle 2 mit dem Wasser/Methanol-Gemisch im Bereich der protonenleitenden Membran 3 in dem Anodenraum 4 proportional zur erzeugten elektrischen Leistung gasförmiges Kohlendioxid entsteht, weisen die Anodenkreisläufe 6 derartiger Brennstoffzellen-Systeme 1 häufig diesen Gasabscheider 11 auf, um das entstehende CO₂-Gas abzuscheiden und so eine Druckerhöhung in dem Anodenkreislauf 6 zu vermeiden.

In dem in Fig. 2 und Fig. 3 dargestellten Ausführungsbeispiel mündet die Verbindungsleitung 9 im Bereich des Gasabscheiders 11 in den Anodenkreislauf 6. Besonders günstig ist es hierbei, wenn die Verbindungsleitung 9 in einen im allgemeinen im oberen Bereich des Gasabscheiders 11 angeordneten Bereich mündet, welcher während des bestimmungsgemäßen Betriebs des Gasabscheiders mit Gas, hier also Kohlendioxid-Gas, befüllt ist.

Der Kathodenkreislauf 8 weist im hier dargestellten Ausführungsbeispiel eine Kompressor-Expander-Einheit 12 mit einem Kompressor 12a und einem Expander 12b auf, welche beide über eine gemeinsame Welle 12c verbunden sind, um die bei der Expansion in dem Expander 12b freiwerdende Energie zu nutzen und dem Kompressor 12a zuzuführen, um damit einen Teil seiner Antriebsenergie zu decken. In dem Kompressor 12a wird nun das sauerstoffhaltige Gas, insbesondere Luft, verdichtet und mit dem erforderlichen Betriebsdruck in den Kathodenkreislauf 8 gefördert. Der Expander 12b, welcher in Strömungsrichtung der Luft nach dem Kathodenraum 5 und nach einer Einmündung 13 der Verbindungsleitung 9 angeordnet ist, expandiert die in dem Kathodenkreislauf 8 strömende Abluft und entläßt diese an die Umgebung.

In Fig. 2 ist das Brennstoffzellen-System 1 in einer Warmlaufphase, also einem Betrieb kurz nach dem Start des Brennstoffzellen-Systems 1 dargestellt. Der in dem Kathodenkreislauf 8 durch den Kompressor 12a erzeugte Druck ist dabei höher als der Druck in dem Anodenkreislauf 6. Über die Verbindungsleitung 9 wird sich dieser Druck nun über den Gasabscheider 11 in den Bereich des Anodenkreislaufs 6 fortpflanzen, so dass es zu einem Druckausgleich zwischen den beiden Kreisläufen 6 und 8 kommt. Über die Kompressor-Expander-Einheit 12 kann also der Druck in beiden Kreisläufen 6 und 8 geregelt werden, wobei in der in Fig. 2 dargestellten Betriebsphase des "Warmlaufs" Luft in den Gasabscheider 11 gefördert wird, um den Druck in dem Anodenkreislauf 6 ausreichend hoch zu halten.

In Fig. 3 ist nun der Aufbau gemäß Fig. 2 während des Normalbetriebs des Brennstoffzellen-Systems 1 dargestellt. In dem Anodenraum 4 entsteht nach den oben erwähnten Vorgängen eine vergleichsweise große Menge an Kohlendioxid, welche in dem Gasabscheider 11 als Kohlendioxid-Gas abgeschieden wird. Dieses Kohlendioxid-Gas gelangt dann über die Verbindungsleitung 9, welche in dem üblicherweise während des Betriebs des Gasabscheiders 11 mit Gas gefüllten Bereich des Gasabscheiders 11 mündet, in den Bereich des Kathodenkreislaufs 8 und wird von dem Expander 12b zusammen mit der Abluft aus dem Kathodenraum 5 der Brennstoffzelle 2 an die Umgebung abgeführt.

Zur Druckregelung des gesamten Brennstoffzellen-Systems 1 ist beim derartigen Aufbau also weiterhin lediglich der geregelte Einsatz der Kompressor-Expander-Einheit 12 erforderlich.

Da üblicherweise Wasser aus dem Anodenkreislauf 6 durch die protonenleitende Membran 3 in den Kathodenkreislauf 8 gelangt, wird hier häufig ein Abscheiden bzw. eine Kondensation dieses Wassers durchgeführt, welches dann in den Anodenkreislauf 6 zurückgeführt wird. Dieser Aufbau ist an sich bekannt und deshalb hier nicht näher dargestellt. Er kann jedoch genutzt werden, um gegebenenfalls über die Verbindungsleitung 9 austretendes Wasser und/oder Methanol aus dem Kathodenkreislauf 8 "auszufiltern", um so zu vermeiden, dass Wasser und/oder Methanol in die Umgebung gelangen, und dass diese Stoffe in dem Anodenkreislauf 6 entsprechend nachgetankt werden müßten. Außerdem kann so auch eine Trocknung des im Normalbetrieb über die Verbindungsleitung 9 abströmenden Kohlendioxid-Gases erfolgen, so dass keine flüssigen Bestandteile aus dem Anodenkreislauf 6 verloren gehen bzw. in die Umwelt gelangen.

## Patentansprüche

1. Brennstoffzellen-System mit wenigstens einer Brennstoffzelle, mit einem Anodenkreislauf, in welchem ein unter Druck stehendes flüssiges Kühlmittel/Brennstoff-Gemisch zirkuliert und einen Anodenraum der Brennstoffzelle durchströmt, welcher über eine protonenleitende Membran von einem Kathodenraum getrennt ist, wobei der Kathodenraum Teil eines Kathodenkreislaufs ist, in welchem ein unter Druck stehendes sauerstoffhaltiges Gas zu dem Kathodenraum strömt,
**dadurch gekennzeichnet, dass**
der Anodenkreislauf (6) und der Kathodenkreislauf (8) zum Druckausgleich in der Brennstoffzelle (2) durch wenigstens eine Verbindungsleitung (9) miteinander verbunden sind.

2. Brennstoffzellen-System nach Anspruch 1,
**dadurch gekennzeichnet, dass**
die wenigstens eine Verbindungsleitung (9) wenigstens eine Ventileinrichtung (10) aufweist, wobei die wenigstens eine Verbindungsleitung (9) mittels der wenigstens einen Ventileinrichtung (10) zu öffnen und zu verschließen ist.

3. Brennstoffzellen-System nach Anspruch 2,
**dadurch gekennzeichnet, dass**
die Ventileinrichtung (10) als Druckregelventil ausgebildet ist.

4. Brennstoffzellen-System nach Anspruch 2 oder 3,
**dadurch gekennzeichnet, dass**
durch die Ventileinrichtung (10) die Verbindungsleitung (9) mittels eines Aktuators und einer Hilfsenergie verschließbar ist.

5. Brennstoffzellen-System nach einem der Ansprüche 1 bis 4,
**dadurch gekennzeichnet, dass**
der Anodenkreislauf (6) einen Gasabscheider (11) aufweist, wobei die wenigstens eine Verbindungsleitung (9) in einem beim bestimmungsgemäßen Betrieb des Gasabscheiders (11) mit Gas gefüllten Bereich des Gasabscheiders (11) in den Anodenkreislauf (6) mündet.

6. Brennstoffzellen-System nach einem der Ansprüche 1 bis 5,
**dadurch gekennzeichnet, dass**
der Kathodenkreislauf (8) einen Kompressor (12a) in Strömungsrichtung des sauerstoffhaltigen Gases vor dem Kathodenraum (5) und einen Expander (12b) in Strömungsrichtung des sauerstoffhaltigen Gases nach dem Kathodenraum (5) aufweist, wobei die Verbindungsleitung (9) im Bereich zwischen dem Kathodenraum (5) und dem Expander (12b) in den Kathodenkreislauf (8) mündet.

7. Brennstoffzellen-System nach Anspruch 6,
**dadurch gekennzeichnet, dass**
zum Druckausgleich in der Brennstoffzelle (2) im Warmlaufbetrieb über die Verbindungsleitung (9) sauerstoffhaltiges Gas aus dem Kathodenkreislauf (8) in den Bereich des Gasabscheiders (11) in dem Anodenkreislauf (6) strömt, wobei im Normalbetrieb abgeschiedenes Kohlendioxid aus dem Bereich des Gasabscheiders (11) in dem Anodenkreislauf (6) in den Bereich des Kathodenkreislaufs (8) strömt.

8. Brennstoffzellen-System nach einem der Ansprüche 1 bis 7,
**dadurch gekennzeichnet, dass**
es zur Verwendung in einem Kraftfahrzeug vorgesehen ist.
